# EUROPÄISCHE PATENTSCHRIFT

(11) **EP 0 616 863 B1**
(45) Veröffentlichungstag und Bekanntmachung des Hinweises auf die Patenterteilung: **03.09.1997**
(21) Anmeldenummer: 94100335.2
(22) Anmeldetag: 12.01.1994
(51) Int. Cl.: B21H 5/00, F16H 55/26

(54) **Verfahren zur Zahnstangenherstellung durch Kaltumformen, danach hergestellte Zahnstange und Vorrichtung zur Verfahrensdurchführung**
Method for the manufacture of a rack by cold forming, rack thus obtained and device for carrying out this method
Procédé pour la fabrication d'une crémaillère par formage à froid, crémaillère ainsi obtenue et dispositif pour la mise en oeuvre de ce procédé

(30) Priorität: 25.02.1993 CH 571/93
(43) Veröffentlichungstag der Anmeldung: 28.09.1994
(73) Patentinhaber: ERNST GROB AG, CH-8708 Männedorf (CH)
(72) Erfinder: Krapfenbauer, Hans, CH-8700 Küsnacht (CH)
(74) Vertreter: Kemény AG Patentanwaltbüro

(56) Entgegenhaltungen:
- WO-A-86/00835
- DE-A- 1 602 676
- DE-B- 1 016 222
- FR-A- 2 181 031
- GB-A- 1 199 963
- SOVIET INVENTIONS ILLUSTRATED Week B51, 6. Februar 1980 Derwent Publications Ltd., London, GB; AN L8457B/51 & SU-A-656 700 (HEAT POWER INSTR.) 16. April 1979

## Beschreibung

Die Erfindung betrifft ein Verfahren zur Herstellung einer Zahnstange durch Kaltumformung, eine nach dem Verfahren hergestellte Zahnstange und eine Vorrichtung zur Durchführung des Verfahrens.

Zahnstangen mit für höhere Ansprüche reichender Präzision werden in der Regel spanend hergestellt.

Die Herstellung durch spanende Bearbeitung ist materialmässig und arbeitstechnisch unwirtschaftlich und zeitraubend und macht oft erhebliche Nachbearbeitung erforderlich.

Aus der Schrift DE-A 1 602 676 ist nun ein Verfahren und eine Vorrichtung bekannt, bei welcher mittels an einem Walzkopf planetenartig umlaufende, drehbar gelagerte Walzen mit Formrippen in rascher Folge einander überlappende Einzelwalzvorgänge auf ein Werkstück gefuhrt werden (sog. Schlagwalzverfahren), wobei ein Werkstückvorschub im wesentlichen parallel zur Walzkopfachse erfolgt.

Aus FR-A 2 181 031 ist eine weitere Schlagwalzvorrichtung bekannt, bei welcher die Walzen entlang einer Schraubenlinie am Walzkopf angeordnet sind.

Bei der Herstellung von Zahnstangen mit diesen bekannten spanlosen Verfahren und Vorrichtungen besteht immer noch der Nachteil, dass die Fertigungszeit durch den Vorschub entlang der Werkstückachse sehr gross ist und viel Zeit für den Rückstell- und Zuführprozess des folgenden Werkstückes gebraucht wird.

Der Erfindung liegt die Aufgabe zugrunde, eine präzise Zahnstange ohne die Nachteile der bekannten Verfahren zu schaffen. Die Herstellung sollte wirtschaftlich vorteilhaft und zeitsparend sein, wobei möglichst auch eine Verbesserung der Qualität der Zahnstange ermöglicht werden sollte.

Zur Lösung dieser Aufgabe wird das im Anspruch 1 definierte Verfahren zur Herstellung einer Zahnstange durch Kaltumformen und eine Vorrichtung nach Anspruch 5 zur Durchführung des Verfahrens vorgeschlagen.

Die nach dem erfindungsgemässen Verfahren hergestellte Zahnstange weist höchste Präzision auf und kann sehr rasch durch Kaltumformen in einem einzigen Arbeitsgang hergestellt werden, wobei man sowohl gerade, als auch schräge Verzahnungen herstellen kann und selbst die Herstellung von Verzahnungen wechselnder Teilung in einem Arbeitsgang möglich ist. Die Zahnstange kann voll und/oder hohl sein; sie kann einen weitgehend runden und/oder polygonalen Querschnitt haben.

Im erfindungsgemässen Verfahren wird das Werkstück relativ zu einem umlaufend angetriebenen Walzkopf im wesentlichen senkrecht zur Walzkopfachse in einer Ebene bewegt, wobei die Winkelabweichung der Bewegung von einer zur Walzkopfachse vertikalen Ebene die Schrägheit oder Geradheit der Verzahnung bewirkt.

Im Walzkopf sind mehrere Walzen vorgesehen, welche je mindestens eine Ringrippe aufweisen. Diese Walzen sind entlang einer Schraubenlinie planetenartig angeordnet am Walzkopf drehbar gelagert. Sie greifen beim Umlaufen des Walzkopfs während der Relativbewegung zwischen dem Walzkopf und dem Werkstück am Werkstück an. Hierbei führt jede Walze in rascher Folge sich in Vorschubrichtung überlappende Einzelwalzvorgänge durch. Bei diesen Einzelwalzvorgängen wird unter Kaltumformung des Werkstücks durch die Ringrippen der Walzen Material vorwiegend vom Zahngrund zum Zahnkopf hin verdrängt. Dabei kann gleichzeitig der Zahnkopf voll ausgeformt werden, was durch Ueberwalzen geschehen kann.

Wenn in der bevorzugten Weise der Walzkopf und die Walzen so gestaltet und angeordnet sind, dass die ganze Verzahnung in einem Durchgang gewalzt werden kann, was zumindest bei relativ kurzen Präzisionsverzahnungen möglich ist, kann man pro Durchgang eine Zahnstange erzeugen.

Man kann dann jeweils am Durchgangsende die Zahnstange gegen ein ungezahntes Werkstück wechseln, so dass in rascher Folge Zahnstangen produzierbar sind. Es ist dabei möglich, im Gegenlauf oder im Gleichlauf zu arbeiten.

Je nach Material und Zahnstange kann man dabei so vorgehen, dass die einzelnen Walzen je an einem nur von einer Walze geformten Verzahnungsabschnitt am Werkstück angreifen. Dies unabhängig davon, ob die einzelnen Walzen nur eine oder mehrere Ringrippen aufweisen.

Wenn es aber nötig ist, kann mann die Walzen in Axialrichtung sich überlappend am Walzkopf vorsehen, so dass sich auch ihr Bearbeitungsgebiet an der Zahnstange jeweils überlappt. Das kann zu einer besseren Ausbildung der Zahnung im Ueberlappungsbereich führen.

Die Vorrichtung zur Durchführung des erfindungsgemässen Verfahrens hat einen Rahmen, in welchem Einspannmittel zur Halterung des Werkstücks vorgesehen sind, und in welchem der um seine Walzkopfachse rotierend antreibbare Walzkopf gelagert ist. Es sind auch Vorschubmittel zur Erzeugung einer quer zur Walzkopfachse gerichteten Relativbewegung zwischen Halterung und Walzkopf vorgesehen; diese Vorschubmittel dienen meist der Bewegung der Haltemittel und können die Form eines mit einer Spindel verschiebbaren Einspannschlittens haben. Es sind auch Mittel zum Einstellen des Abstands zwischen Werkstück und Walzkopf vorhanden, welche beispielsweise eine Höhenverstellung der Haltemittel darstellen können. Im Walzkopf sind, vorzugsweise um zur Walzkopfachse parallele Achsen drehbar, die Walzen gelagert. Damit die Walzen nicht alle auf einmal angreifen, was eine sehr hohe Belastung brächte, sind sie entlang einer Schraubenlinie angeordnet. Jede Walze trägt mindestens eine Ringrippe, welche profilmässig etwa der durch sie zu formenden Zahnlücke entspricht.

Wenn die Walzen axial nebeneinander angeordnet sind, so dass sie beim Umlaufen profilmässig überlappungsfrei sind, bildet jede Ringrippe ihre eigene Zahnlücke aus. Das kann in Randbereichen zwischen den Angriffsstellen einzelner Walzen zu gewissen Abweichungen führen.

Solche Abweichungen kann man zumindest weitgehend vermeiden, wenn die Walzen im Walzkopf in Axialrichtung sich profilmässig teilweise überlappend angeordnete mehrrippige Walzen sind, weil dann die auf die vorher im Werkstückeingriff befindliche Walze folgende Walze toleranzausgleichend und formverbessernd wirken kann.

Die Vorschubmittel und die Hubverstellung werden vorzugsweise als NC-Achsen ausgebildet, so dass über eine entsprechende CNC-Steuerung auf die Verzahnungsgeometrie Einfluss genommen werden kann. Dadurch kann z.B. eine Längsballigkeit der Zahnflanken erzeugt werden.

Die Erfindung wird nachstehend anhand der rein schematischen Zeichnung einer derzeit bevorzugten Ausführungsform geschildert:

Es zeigen:

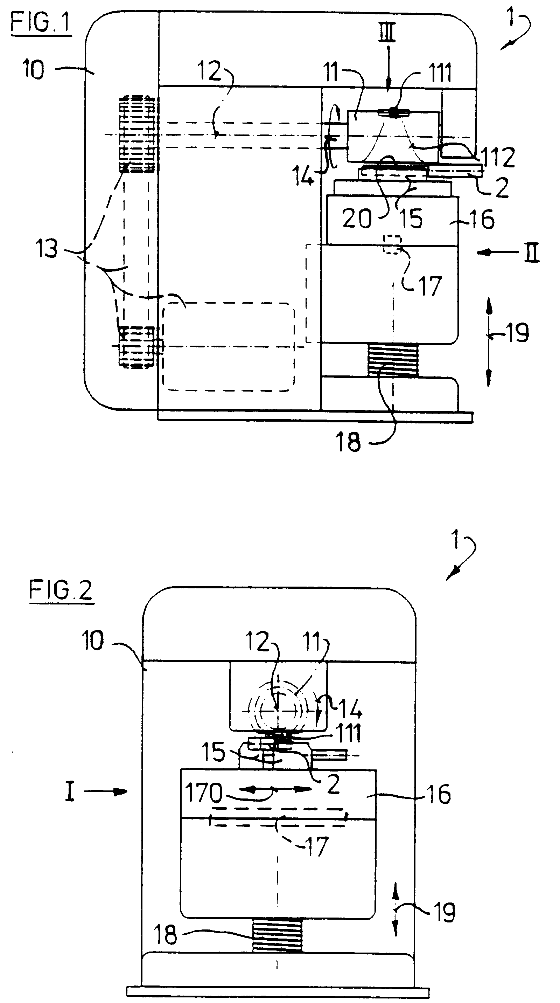

- Fig. 1: eine Ansicht einer Vorrichtung
nach Pfeil I in Fig. 2,
- Fig. 2: eine Ansicht dieser Vorrichtung
nach Pfeil II in Fig. 1,

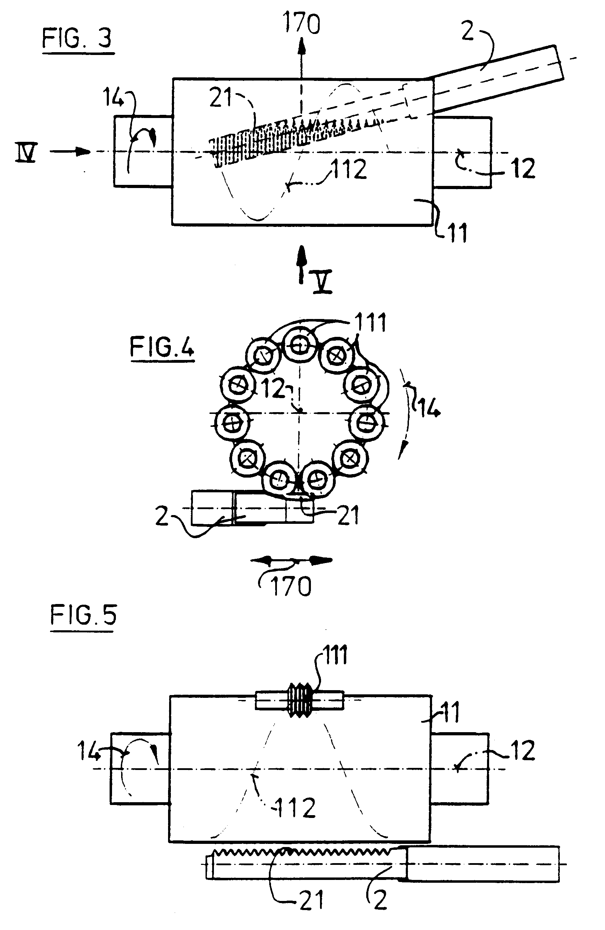

- Fig. 3: eine gegenüber Fig. 1 und 2 vergrösserte Draufsicht nach Pfeil III in Fig. 1 auf den Walzkopf mit einem darunter gezeichneten, halb gewalzten Werkkstück,
- Fig. 4: eine Ansicht nach Pfeil IV in Fig. 3 der Walzen und des Werkstücks,
- Fig. 5: eine Ansicht nach Pfeil V in Fig. 3 des Walzkopfes und des fertigen Werkstücks,

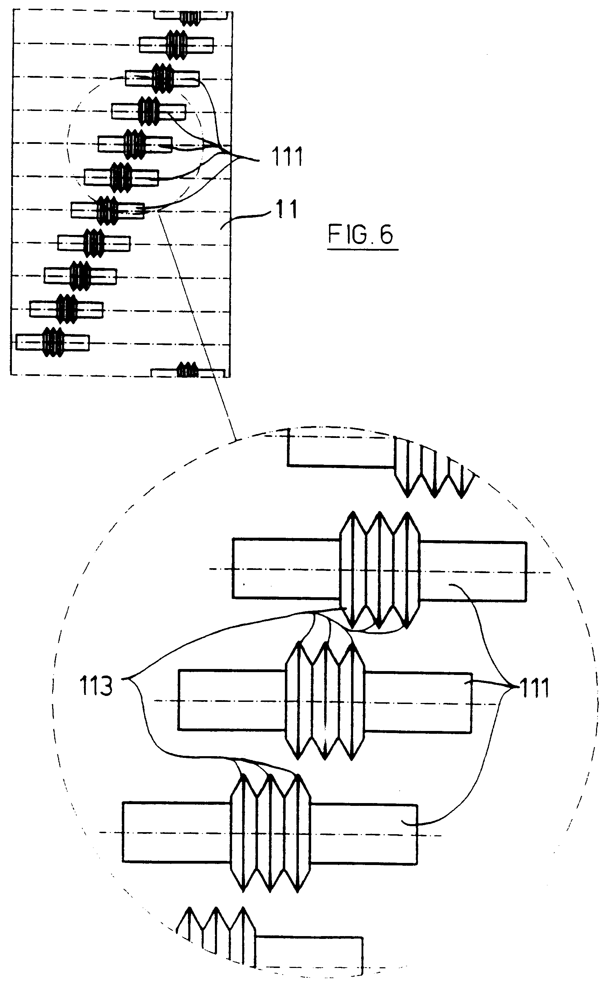

- Fig. 6: eine Abwicklung des Walzkopfes mit allen Walzen, sowie einem weiter vergrösserten Ausschnitt aus dieser Abwicklung,
- Fig. 7: einen Querschnitt durch einen vollen Werkstück-Rohling mit abgeflachter zu zahnender Fläche.
- Fig. 8: einen Querschnitt durch das aus dem Werkstück-Rohling der Fig. 7 hergestellte Zahnstangen-Werkstück,
- Fig. 9: einen Querschnitt durch einen hohlen runden Werkstück-Rohling,
- Fig. 10: einen Querschnitt durch das aus dem Werkstück-Rohling der Fig. 9 gefertigte Zahnstangen-Werkstück,
- Fig. 11: einen Querschnitt durch einen hohlen polygonalen Werkstück-Rohling,
und
- Fig. 12: einen Querschnitt durch das aus dem Werkstück-Rohling der Fig 11 gefertigte Zahnstangen-Werkstück.

In der Zeichnung bedeuten:
- 1: Vorrichtung.
- 10: Rahmen von 1.
- 11: Walzkopf.
- 111: Walzen, an Walzkopf 11 planetenartig drehbar gelagert.
- 112: Schraubenlinie, hier eine einzige, auf der Walzen 111 angeordnet sind; es könnten aber auch mehrere Schraubenlinien sein.
- 113: Ringrippen, hier je drei an jeder Walze 111, es könnten aber auch weniger oder mehr sein.
- 12: Walzkopfachse.
- 13: Walzkopfantrieb.
- 14: Umlaufrichtung von Walzkopf 11.
- 15: Halterung für das Werkstück (Zahnstange).
- 16: Schlitten zum Verschieben der Halterung 15.
- 17: Vorschubmittel zum Vorschieben des Schlittens 16.
- 170: Vorschubrichtung des Schlittens 16 und somit der Halterung 15 samt Werkstück 2 beim Walzen.
- 18: Hubverstellung des Schlittens 16 und somit der Halterung 15.
- 19: Hubverstellrichtung 16 beim Annähern der Halterung 15 an den Walzkopf 11 .
- 2: Werkstück (Rohling (201, 203, 205) bzw. Zahnstange (202, 204, 206); voll oder hohl).
- 20: Zahnung des Werkstücks 2 (202, 204, 206)
- 201: Rohling, voll.
- 2010: Abflachung an 201.
- 202: Zahnstange, voll, aus 201.
- 203: Rohling, hohl und rund.
- 204: Zahnstange, hohl aus 203.
- 205: Rohling, hohl und polygonal.
- 206: Zahnstange, hohl aus 205.

Die Vorrichtung 1 hat einen Rahmen 10, in welchem ein Walzkopf 11 um seine Walzkopfachse 12 drehend mittels des Walzkopfantriebs 13 in Umlaufrichtung 14 antreibbar gelagert ist.

Im Walzkopf 11 sind Walzen 111 entlang einer Schraubenlinie 112 frei drehbar gelagert, so dass sie mit dem Walzkopf 11 planetenartig umlaufen. Man könnte diese oder andere Walzen auch entlang mehrerer Schraubenlinien anordnen, was hier nicht besonders dargestellt wurde.

Jede Walze hat hier drei Ringrippen 113, wobei sie so angeordnet sind, dass die beiden äusseren Ringrippen hinsichtlich ihres Angriffs am Werkstück 2 sich in Richtung der Walzkopfachse 12 überlappen. Man könnte sowohl bei auf einer als auch bei auf mehreren Schraubenlinien angeordneten Walzen auch andere Ringzahlen anwenden. Besonders günstig ist auch eine Walze mit einer Ringrippe.

Am Rahmen ist auch eine Halterung 15 für das Werkstück 2 vorgesehen, in welcher das Werkstück 2 eingespannt wird.

Diese Halterung 15 ist an einem Schlitten 16 angebracht und kann mit dem Schlitten 16 durch die Vorschubmittel 17 in Vorschubrichtung 170 unter dem Walzkopf 11 hindurchgeschoben werden. Das kann automatisch geschehen.

Damit man die Zustellung des Werkstücks zum Walzkopf vornehmen kann, ist der Schlitten 16 durch die Hubverstellung 18 in Hubverstellrichtung 19 verstellbar.

Um eine Zahnstange zu walzen, spannt man ein Werkstück 2 in die Halterung 15, nimmt mit der Hubverstellung 18 die Zustellung des Werkstücks 2 zum Walzkopf 11 so vor, dass die Walzen 111 am Werkstück 2 richtig angreifen können.

Der Walzkopf 11 wird in seiner Umlaufrichtung 14 mit geeigneter Drehzahl gedreht, wobei die an ihm drehbar (insbesondere frei drehbar) gelagerten Walzen 111 mit ihm planetenartig umlaufen.

Mit den Vorschubmitteln schiebt man den Schlitten 16 und somit die Halterung 15 samt dem Werkstück 2 in der Vorschubrichtung 170 unter dem Walzkopf 11 durch.

Dabei greifen die Walzen 111 am Werkstück 2 an und erzeugen die Zahnung 20 in einem Durchgang, wobei jede Ringrippe 113 Material vorwiegend vom Zahngrund zum Zahnkopf fördernd verdrängt.

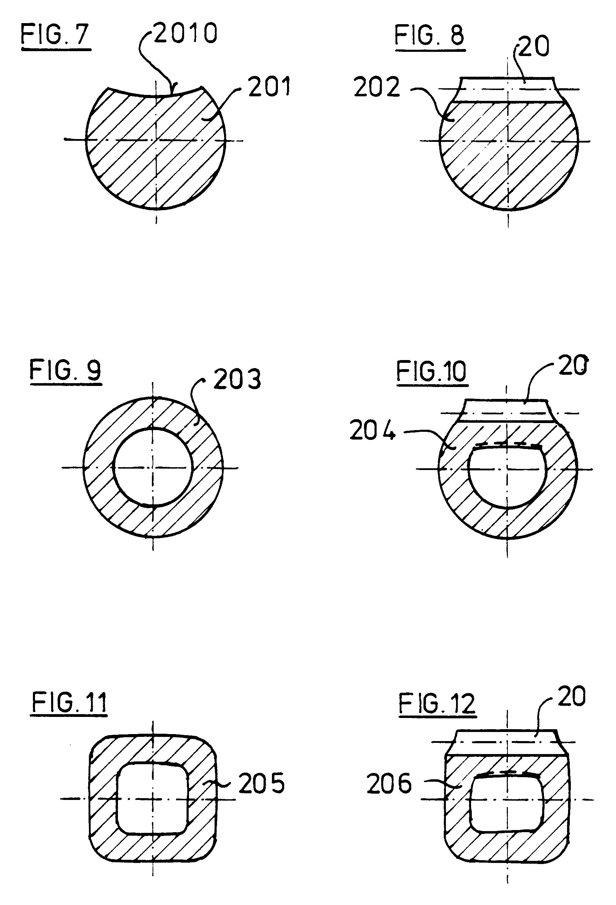

Wenn man einen vollen Werkstück-Rohling 201 umformen will, kann es in der Regel erforderlich sein, vorerst eine besonders geformte, empirisch zu ermittelnde, spanend herzustellende Abflachung 2010 zum Zahnen vorzubereiten. Wie Fig. 7 zeigt, kann dabei eine aufwendig herzustellende konkave Form der Abflachung erforderlich sein. Diese Abflachung muss besonders dann sehr präzis ausgebildet sein, wenn der Zahnkopf bei der Herstellung der Zahnstange auch überwalzt werden soll.
Wenn man dagegen von einem hohlen Rohling 203 bzw. 205 ausgeht, kann man den Arbeitsgang der Herstellung der Abflachung weglassen.
So ist in Fig. 9 ein runder hohler Rohling dargestellt, der ohne jede vorherige Formgebung direkt zur Zahnstange umgeformt werden kann.
In Fig. 11 ist ein polygonaler hohler Rohling dargestellt, der ebenfalls ohne vorangehende Formgebung direkt zur Zahnstange umgeformt werden kann.

### Arbeitsbeispiel:

Herstellung einer Zahnstange mit 28 Zähnen, Modul 2.5, ausgehend von einem Rohling 201 aus einem legierten Vergütungsstahl.

Man verwendet einen (dem gezeichneten Walzkopf 11 ähnlichen) Walzkopf, welcher mit 13 Walzen bestückt ist, welche ähnlich wie die gezeichneten Walzen 111 je drei Ringrippen 113 aufweisen und sich, ähnlich wie für die Zeichnung beschrieben wurde, hinsichtlich ihres Angriffs am Werkstück teilweise axial überlappen.
Der Walzkopf wird mit einer Drehzahl von 1250 Umdrehungen pro Minute angetrieben.

Bei einer Schrägstellung des Werkstücks von 7.5 Winkelgrad gegenüber der Walzkopfsachse ergibt sich (inklusive Einlaufstrecke) eine Walzlänge von 60 mm.

Der Vorschub beträgt 1000 mm pro Minute, also 0.8 mm pro Walzkopfumdrehung, so dass die Walzzeit für die genannte Zahnstange 0.06 Minuten beträgt.

Die so hergestellte Zahnstange 202 wird induktiv gehärtet.

Die Verzahnungsqualität übertrifft diejenige, welche normalerweise beim Spanen erreicht wird.

Aehnlich kann man auch hohle, runde oder polygonale Rohlinge (z.B. 203, 205) kalt umformen.

## Patentansprüche

1. Verfahren zum Herstellen einer Zahnstange (2,202,204,206) aus einem Werkstück (2,201,203,205), welches bezüglich einem um seine Walzkopfachse (12) rotierend angetriebenen Walzkopf (11), welcher planetenartig umlaufende, entlang einer Schraubenlinie (112) drehbar gelagerte Walzen (111) aufweist, die je mindestens eine zahnlückenform-artige Ringrippe (113) aufweisen, derart relativ bewegt wird, dass mit jeder Walze (111) in Bewegungsrichtung in rascher Folge überlappende Einzelwalzvorgänge geführt werden, bei denen unter Kaltumformung des Werkstückes (2,201,203,205) durch die Ringrippen (113) Werkstückmaterial vorwiegend vom Zahngrund zum Zahnkopf hin verdrängt wird, dadurch gekennzeichnet, dass zwischen dem Werkstück (2,201,202,203,204,205,206) und dem Walzkopf (11) in einer im wesentlichen senkrecht zur Walzkopfachse (12) verlaufenden Vorschubrichtung (170) eine Relativbewegung vorgenommen wird.

2. Verfahren nach Anspruch 1, dadurch gekennzeichnet, dass mit jeder Walze (111) je an einem nur von ihr geformten Abschnitt der Verzahnung (20) am Werkstück (2,201,202,203,204,205,206) angegriffen wird.

3. Verfahren nach Anspruch 1, dadurch gekennzeichnet, dass mit am Walzkopf (11) in Axialrichtung sich teilweise überlappend (Fig. 6) gelagerten mehrrippigen Walzen (111) an sich teilweise überlappenden Abschnitten der Verzahnung (20) am Werkstück (2,201,202,203,204,205,206) angegriffen wird.

4. Verfahren nach einem der Ansprüche 1 bis 3, dadurch gekennzeichnet, dass auch der Zahnkopf überwalzt wird.

5. Vorrichtung zur Durchführung des Verfahrens nach einem der Ansprüche 1 bis 4, welche einen Rahmen (10), eine Halterung (15) zum Einspannen des Werkstückes (2,201,203,205), einen um seine Werkkopfachse (12) rotierend antreibbaren Walzkopf (11), Vorschubmittel (17) zur Erzeugung einer Vorschubbewegung zwischen Halterung (15) und Walzkopf (11) und eine Hubverstellung (18) zum Regeln der Zustellung des Werkstückes (2,202,204,206) zum Walzkopf (11) aufweist, wobei am Walzkopf (11) mehrere je mindestens eine zahnlückenform-artige Ringrippe (113) aufweisende Walzen (111) entlang einer Schraubenlinie (112) planetenartig angeordnet drehbar gelagert sind, um am Werkstück (2,201,202,203,204,205,206) anzugreifen, dadurch gekennzeichnet, dass die Vorschubmittel (17) derart ausgebildet sind, dass sie eine im wesentlichen senkrecht zur Walzkopfachse (12) gerichtete Vorschubbewegung (170) erzeugen.

6. Vorrichtung nach Anspruch 5, dadurch gekennzeichnet, dass Walzen (111) entlang mehrerer Schraubenlinien am Walzkopf (11) angeordnet sind.

7. Vorrichtung nach Anspruch 5 oder 6, dadurch gekennzeichnet, dass jede Walze (111) in Axialrichtung neben einer benachbarten Walze (111) profilmässig überlappungsfrei im Walzkopf (11) angeordnet ist.

8. Vorrichtung nach Anspruch 5 oder 6, dadurch gekennzeichnet, dass die Walzen (111) im Walzkopf (11) in Axialrichtung sich profilmässig teilweise überlappend (Fig. 6) angeordnete mehrrippige Walzen (111) sind.

## Claims

1. Method for manufacturing a toothed rack (2,202,204,206) out of a workpiece (2,201,203,205), which is relatively moved in relation to a rolling head (11) rotatably driven around his rolling axis (12), said rolling head (11) having a plurality of rollers (111) revolving in a planetary manner and rotatably journalled along a helical line (112), each of said rollers (111) having at least one tooth space-shaped forming ring rib (113), in such a manner that each roller (111) is performing in the moving direction in quick and overlapping succession single rolling processes, thereby displacing workpiece material predominantly from the bottom land area of the toothing to the top land area of the toothing by cold forming the workpiece (2,201,203,205) by means of the forming ring rib (113), characterised in that a relative movement is performed between the workpiece (2,201,202,203,204,205, 206) and the roller head (11) in a substantially perpendicular feeding direction (170) with respect to the roller axis (12).

2. Method according to claim 1, characterised in that each roller (111) engages only the portion of the toothing (20) being formed by itself on said workpiece (2,201,202,203,204,205,206).

3. Method according to claim 1, characterised in that multi-ribbed rollers (111), journalled in the rolling head (11) in a partially overlapping manner (Fig. 6) in the axial direction, engage partially overlapping portions of the toothings (20) of the workpiece (2,201,202,203,204,205,206).

4. Method according to one of claims 1 to 3, characterised in that also the top land area of the toothing is treated by a rolling process.

5. Apparatus for carrying out the method of one of the claims 1 to 4, comprising a frame (10), a holding device (15) for clamping the workpiece (2,201,203,205), a rolling head (11) rotatably drivable around ist working head axis (12), feeding means (17) for performing a feeding movement between the holding device (15) and the rolling head (11) and adjustment means (18) for controlling the feed of the workpiece (2,202,204,206) towards the rolling head (11), said rolling head (11) including a plurality of rollers (11), each roller having at least one tooth space-shaped forming ring rib (113) and being rotatably journalled positioned along a helical line (112) in a planetary type manner, in order to engage said workpiece (2,201,202,203,204,205,206), characterised in that the feeding means (17) are designed such as to perform a feeding movement (170) substantially perpendicular with respect to the rolling head axis (12).

6. Apparatus according to claim 5, characterised in that the rollers (111) are arranged on the rolling head (11) along a plurality of helical lines.

7. Apparatus according to claim 5 or 6, characterised in that each roller (111) is arranged adjacent to the next roller in the rolling head (11) free of overlapping profiles in the axial direction.

8. Apparatus according to claim 5 or 6, characterised in that the rollers (111) of the rolling head (11) are multi-ribbed rollers (111) and, in the axial direction, are partially overlapping each other in profile (Fig. 6).

## Revendications

1. Procédé pour la fabrication d'une crémaillère (2, 202, 204, 206) à partir d'une pièce à usiner (2, 201, 203, 205), cette dernière étant déplacée relativement par rapport à une tête de cylindre (11) qui est entraînée rotativement autour de son axe de rotation (12), la tête de cylindre (11) comprenant plusieures cylindres (111) rotatifs à mouvement planétaire montés le long d'une ligne hélicolidale (112), chaque cylindre (111) possédant au moins une nervure circonférentielle en forme d'un entredent (113), de telle manière que chaque cylindre (111) exécute dans la direction de son déplacement en suite rapide, et se recouvrant des opérations individuelles de laminage en déplaçant par formage à froid de la pièce (2, 201, 203, 205) à l'aide de la nervure circonférentielle (113) du materiel de la pièce à partir du fond jusqu'à la pointe de la dent, caracterisé en ce qu'un déplacement relatif est exécuté entre la pièce (2, 201, 202, 203, 204, 205, 206) et la tête de cylindre (11) dans une direction d'avance (170) essentiellement perpendiculaire par rapport à l'axe de rotation (12).

2. Procédé selon la revendication 1, caractérisé en ce que chaque cylindre (111) attaque seulement dans une section de la denture (20) qui a été formée par luit-même dans la pièce à usiner (2, 201, 202, 203, 204, 205, 206).

3. Procédé selon la revendication 1, caractérisé en ce que l'on attaque la pièce à usiner (2, 201, 202, 203, 204, 205, 206) à des sections de la denture (20) se recouvrant partiellement au moyens de cylindres (111) à nervures multiples montés en recouvrement partiel (Fig. 6) en direction axiale sur la tête de cylindre (11).

4. Procédé selon une des revendications 1 à 3, caractérisé en ce que la pointe de la dent est également soumise à une opération de laminage.

5. Dipositif pour la mise en oeuvre du procédé selon une des revendications 1 à 4, comprenant un bâti (10), un élément (15) pour fixer la piéce à usiner (2, 201, 203, 205), une tête de cylindre (11) entraînée autour de son axe de rotation (12), moyens d'avance (17) pour créer un mouvement d'avance entre l'élément de fixation (15) et la tête de cylindre (11) et des moyens d'ajustement de l'avance (18) pour le contrôle du mouvement d'alimentation de la pièce à usiner (2, 202, 204, 206) vers la tête de cylindre (11), la tête de cylindre (11) comprenant une pluralité de cylindres (11), dont chaqun en forme d'entredent possède au moins une nervure circonferentielle (113) et est monté rotativement le long d'une ligne hélicolidale (112) d'une manière planétaire, pour attaquer la pièce à usiner (2, 201, 202, 203, 204, 205, 206), caracterisé en ce que les moyens d'avance (17) sont agencés d'une telle manière à créer un mouvement d'avance (170) essentiellement perpendiculaire par rapport à l'axe de rotation (12).

6. Dispositif selon la revendication 5, caracterisé en ce que les cylindres (111) sont arrangées à la tête de cylindre (11) le long de plusieurs lignes hélicodiales.

7. Dispositif selon la revendication 5 ou 6, caracterisé en ce que chaque cylindre (111) est monté à côté à côté d'un cylindre adjacent dans le tête de cylindre (11) sans recouvrement des profils en direction axiale.

8. Dispositif selon la revendication 5 ou 6, caracterisé en ce que les cylindres (111) montés dans la tête de cylindre (11) sont des cylindres à nervures multiples (111) qui, en direction axiale présentent des profils se recouvrant partiellement.
